# EUROPEAN PATENT APPLICATION

(11) **EP 4 667 168 A1**
(43) Date of publication of application: **24.12.2025**
(21) Application number: 24183142.9
(22) Date of filing: 19.06.2024
(51) Int. Cl.: B25J 9/16

(54) **OBTAINING TRAINING DATA SETS FOR CONTROLLING A ROBOT AND CONTROLLING A ROBOT BASED ON A TRAINED MODEL**

(71) Applicant: OMRON Corporation, Kyoto 600-8530 (JP)
(72) Inventor: KAMIJO, Tatsuya, Bunkyo-ku, Tokyo, 11-0033 (JP); BELTRAN-HERNANDEZ, Cristian, Bunkyo-ku, Tokyo, 113-0033 (JP); HAMAYA, Masashi, Bunkyo-ku, Tokyo, 113-0033 (JP)
(74) Representative: Hoffmann Eitle

(57) **Abstract**

A method is provided for obtaining a training data set for controlling a rigid robot to perform manipulation by means of an end effector, EE. The method includes controlling (S10), based on control information provided by a remote controller operated by a user, the robot to perform a manipulation task, the control information indicating at least a remotely controlled position that the robot is to take during the manipulation task according to an operation of the remote controller by the user. Further, the method includes obtaining (S20) a training data set including position information and strength information in association with each other, wherein the position information indicates one or more positions of the EE during the manipulation task in response to the control information and the strength information indicates one or more strength values detected at the EE in correspondence of a respective one of the one or more positions of the EE. The training data further includes, in association with the position information and the strength information, stiffness information and image information, wherein the stiffness information indicates a stiffness applied by the rigid robot in correspondence of the position information, and wherein the image information represents one or more images in correspondence of a respective one of the one or more positions of the EE, wherein preferably each of the one or more images shows at least a portion of the EE.

## Description

### FIELD OF THE INVENTION

The present disclosure relates to methods for obtaining a training data set for controlling a rigid robot, methods for controlling a rigid robot to perform manipulation as well as corresponding entities, systems and programs for computer. More in detail, the disclosed solution relates to learning contact-rich manipulation task with rigid robots from a few demonstrations.

### TECHNICAL BACKGROUND

Solutions for controlling robots and for training robots to manipulate objects are known. However, there is a need to overcome certain challenges. For example, dexterous robotic manipulation holds significant importance in various fields due to its ability to automate tasks that involve physical interaction with objects. As example, one may consider widely used rigid robots, such as collaborative or industrial robots, that can only be actuated through position/velocity commands. Compliance control schemes may be applied that allow rigid robots to handle tasks involving direct contact by controlling contact forces through an external sensor.
However, programming robots to do dexterous contact-rich manipulations remains an open challenge.

Learning from Demonstrations (LfD) has emerged as an intuitive and promising solution to teach robots dexterous manipulations. Instead of manually programming a sequence of actions or engineering a reward function for the robot to learn from, in LfD, the operator can show the robot how exactly to perform the task, see "Learning Fine-Grained Bimanual Manipulation with Low-Cost Hardware", Tony Z. Zhao et al., arXiv:2304.13705v1 [cs.RO], 23 Apr 2023. However, the challenges of effectively using LfD are sample efficiency (the need of many demonstrations for each task), selecting optimal stiffness parameters for the compliance controller, and the teaching interface.

### SUMMARY OF THE INVENTION

The object is achieved by the subject matter of the independent claims. Advantageous embodiments are defined by the dependent claim. The following represent aspects of the invention:
A1. Method for obtaining a training data set for controlling a rigid robot to perform manipulation by means of an end effector, EE, the method including:
   - controlling (S10), based on control information provided by a remote controller operated by a user, the robot to perform a manipulation task, the control information indicating at least a remotely controlled position that the robot is to take during the manipulation task according to an operation of the remote controller by the user;
   - obtaining (S20) a training data set including position information and strength information in association with each other, wherein the position information indicates one or more positions of the EE during the manipulation task in response to the control information and the strength information indicates one or more strength values detected at the EE in correspondence of a respective one of the one or more positions of the EE, wherein
   the training data further includes, in association with the position information and the strength information, stiffness information and image information, wherein the stiffness information indicates a stiffness applied by the rigid robot in correspondence of the position information, and wherein the image information represents one or more images in correspondence of a respective one of the one or more positions of the EE, wherein preferably each of the one or more images shows at least a portion of the EE.
A2. Method for controlling a rigid robot to perform manipulation by means of an end effector, EE, the method including:
   determining, based on a trained control model, a position that the robot has to take based on a current position information, a current strength information and current image information of the robot, wherein
   the training control model has been trained based on a training data set including position information, strength information, stiffness information and image information of the robot in association with each other, wherein
   the position information, strength information, stiffness information and image information are obtained based on control information provided by a remote controller operated by a user during a manipulation task performed during training.
A3. Method according to any of aspects A1 to A3, wherein
   the manipulation task includes one or more manipulation actions each performed at a corresponding time instant in response to a respective input from the remote controller, wherein
   the position information represents one or more positions of the EE in response to a respective one of the one or more control actions.
A4. Method according to any of the preceding aspects, wherein the image information includes a plurality of images of the EE in correspondence of a respective one of the one or more positions of the EE, wherein the plurality of images refers to different points of view.
A5. Method according to any of the preceding aspects, wherein the training data further includes compliance control information representing one or more compliance parameters in correspondence of a respective one of the one or mode positions of the EE, each of the one or more compliance parameters is a parameter for controlling a strength applied by a robot during manipulation.
A6. Method according to aspect A5, wherein each of the one or more compliance parameters includes a stiffness parameter of the robot.
A7. Method according to aspects A5 or A6, wherein the one or more compliance parameters is in response to a respective input from the controller.
A8. The method according to any of the preceding aspects, including providing a manipulation feedback to the user during the manipulation task, wherein the manipulation feedback preferably includes providing a feedback in correspondence of the one or a plurality of manipulation actions.
A9. The method according to any of the preceding aspects, further including training a neural network to perform manipulation based on the generated training data.
A10. The method according to aspect A8, further including controlling the robot to perform manipulation based on the trained neural network, an image of the EE at a given time instant, a position and preferably (optionally) a strength of the EE at the given time instant.
A11. The method according to any of the preceding aspects, wherein the strength information includes at least one of a force detected at the EE and a torque detected at the EE.
A12. The method according to any of aspects A1 to A11, wherein the control information provided by means of the remote controller include control information resulting from the user responding to the manipulation feedback.
A13. Method according to any of aspect A2 to A12, wherein the training data is obtained by means of the method of aspect A1.
A14. Method according to any of the preceding aspects, wherein the remote controller provides a manipulation feedback to the user during the manipulation task, further wherein the manipulation feedback indicates a strength applied by the robot during the manipulation task.
A15. A computer program comprising instructions configured to execute, when said instructions are executed on a computer, the steps of any of aspect A1 to A14.
A16. An entity for obtaining a training data set for controlling a rigid robot (100) to perform manipulation by means of an end effector (101), EE, the entity including:
   - means for controlling (120), based on control information provided by a remote controller (110) operated by a user, the robot (100) to perform a manipulation task, the control information indicating at least a remotely controlled position that the robot (100) is to take during the manipulation task according to an operation of the remote controller by the user;
   - means for obtaining (120) a training data set including position information and strength information in association with each other, wherein the position information indicates one or more positions of the EE (101) during the manipulation task in response to the control information and the strength information indicates one or more strength values detected at the EE (101) in correspondence of a respective one of the one or more positions of the EE (101), wherein
   the training data further includes, in association with the position information and the strength information, stiffness information and image information, wherein the stiffness information indicates a stiffness applied by the rigid robot (100) in correspondence of the position information, and wherein the image information represents one or more images in correspondence of a respective one of the one or more positions of the EE (101), wherein preferably each of the one or more images shows at least a portion of the EE (101) .
A17. A entity for controlling a rigid robot to perform manipulation by means of an end effector, EE, the entity including:
   means for determining (120), based on a trained control model, a position that the robot has to take based on a current position information, a current strength information and current image information of the robot, wherein
   the trained control model has been trained based on a training data set including position information, strength information and image information of the robot in association with each other, wherein
   the position information, strength information, stiffness information and image information are obtained based on control information provided by a remote controller operated by a user during a manipulation task performed during training.
A18. Entity according to aspect A16 or A17, wherein the remote controller provides a manipulation feedback to the user during the manipulation task, further wherein the manipulation feedback indicates a strength applied by the robot during the manipulation task.
A19. Entity according to aspect A16 or A17, wherein
   the manipulation task includes one or more manipulation actions each performed at a corresponding time instant in response to a respective input from the remote controller, wherein
   the position information represents one or more positions of the EE in response to a respective one of the one or more control actions.
A20. Entity according to any of aspects A16 to A19, wherein the image information includes a plurality of images of the EE in correspondence of a respective one of the one or more positions of the EE, wherein the plurality of images refers to different points of view.
A21. Entity according to any of aspects A16 to A20, wherein the training data further includes compliance control information representing one or more compliance parameters in correspondence of a respective one of the one or mode positions of the EE, each of the one or more compliance parameters is a parameter for controlling a strength applied by a robot during manipulation.
A22. Entity according to aspect A21, wherein each of the one or more compliance parameters includes a stiffness parameter of the robot.
A23. Entity according to any of aspects A21 and A22, wherein the one or more compliance parameters is in response to a respective input from the controller.
A24. Entity according to any of aspects A16 to A23, including means for providing a manipulation feedback to the user during the manipulation task, wherein the manipulation feedback preferably includes providing a feedback in correspondence of the one or a plurality of manipulation actions.
A25. Entity according to any of aspects A16 to A24, further including means for training a neural network to perform manipulation based on the generated training data.
A26. Entity according to any of aspects A16 to A25, further including means for controlling the robot to perform manipulation based on the trained neural network, an image of the EE at a given time instant, a position and preferably (optionally) a strength of the EE at the given time instant.
A27. Entity according to any of aspects A16 to A26, wherein the strength information includes at least one of a force detected at the EE and a torque detected at the EE.
A28. Entity according to any of aspects A16 to A27, wherein the control information provided by means of the remote controller include control information resulting from the user responding to the manipulation feedback.
A29. Entity according to any of aspects A16 to A28, wherein the training data is obtained by means of the entity according to any of claim 16 to 28 or according to a method according to any of claims 1 and 3 to 15.
A30. Entity according to any of aspects A16 to A29, wherein the remote controller is configured to provide a manipulation feedback to the user during the manipulation task, further wherein the manipulation feedback indicates a strength applied by the robot during the manipulation task.

### BRIEF DESCRIPTION OF FIGURES

Fig. 1 is a flowchart showing a method for obtaining a training dataset for controlling a robot according to an embodiment;
Fig. 2 is a block diagram showing an entity for obtaining a training data set for controlling a rigid robot to perform manipulation according to an embodiment;
Fig. 3 is a block diagram showing an entity for obtaining a training data set for controlling a rigid robot to perform manipulation according to an embodiment;
Fig. 4 is a flowchart showing a method for obtaining a training dataset for controlling a robot according to an embodiment;
Fig. 5 is a flowchart showing a method for controlling a robot according to an embodiment;
Fig. 6 is a schematic block diagram of a system according to an embodiment;
Fig. 7 schematically depicts an example of a remote controller;
Fig. 8 is a schematic representation of a Comp-ACT Network architecture;
Fig. 9 shows a block diagram of a computer suitable for executing instructions according to one embodiment of the present invention;
Figs. 10A to 10F show examples of tasks.

### DETAILED DESCRIPTION

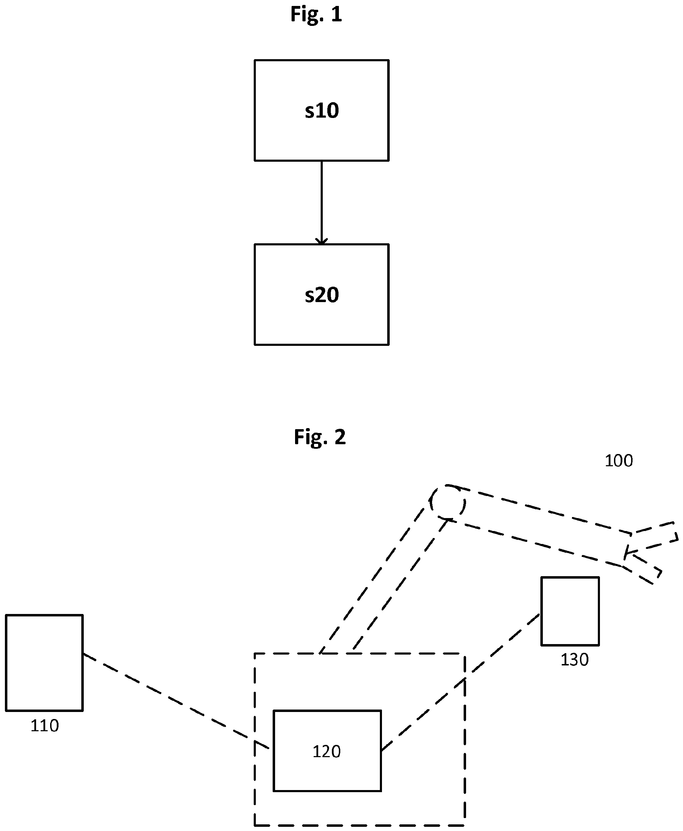

With reference to Fig. 1, an explanation is provided of a first embodiment directed at a method for obtaining a training data set for controlling a rigid robot to perform manipulation by means of an end effector (also EE in short). The method comprises a step S10 of controlling, based on control information provided by a remote controller operated by a user, the robot to perform a manipulation task. The control information indicates at least a remotely controlled position that the robot is to take during the manipulation task according to an operation of the remote controller by the user. In other words, a user (for example, an operator) operates a remote controller to guide the robot to perform a certain task; the operation of the controller causes the controller to output control information indicating a position that the robot is to take by translation and/or rotation; the control unit of the robot then controls the robot to assume a position corresponding to the control information received by the remote controller. For example, as also later illustrated, the controller may be represented by a VR controller capable of transmitting position and/or direction detected by the VR controller (or a relative position and/or relative rotation and/or relative direction of a state in which the controller finds itself as a result of an operation from a reference/starting position), and which is used to control the robot to perform certain manipulations. Other remote controllers are suitable, for example also detecting force and/or torque (F/T) applied by the user and transmitting this info to the robot (see e.g., https://www.forcedimension.com/products/omega). For a one arm robot there is usually one EE; for a two-arm robot, two EEs may be present, one EE for each arm. For some applications, it may be possible having multiple EEs for one single arm, for example to avoid switching tools on the same arm. In this disclosure, for simplicity, we will here refer to one EE per arm.

As sated above, the output control information indicates a position (which may also be referred to as a pose) that the robot is to take, which includes indicating an absolute position within a reference coordinate system or a relative position indicating a displacement between a starting position and an end position during one manipulation action. A displacement includes a translation and/or rotational displacement. An action is a unit of a movement that the robot performs during a manipulation task. In other words, a manipulation task may be considered as a sequence of actions into which the manipulation task can be divided into. For example, a manipulation task represented by a picking and insertion task may be divided into a sequence of actions, i.e., movements, that the robot performs from an initial position until a final position corresponding to completion of the task. Each of the actions may be determined in correspondence of respective time instants, respective displacement values and/or respective control values fed to the robot's controller.

In step S10, it is obtained a training data set including position information and strength information in association with each other. The position information indicates one or more positions of the EE during the manipulation task in response to the control information, i.e., the position information indicates the positioning taken by the EE in response to the control information received from the remote controller. The strength information indicates one or more strength values detected at the EE in correspondence of a respective one of the one or more positions of the EE. In other words, as a result of the control information received from the remote controller, the EE is controlled to take a certain position and to apply a certain strength; the strength information indicates the strength actually applied by the EE in response to the operation via the remote controller. The strength actually applied by the EE may be the one applied by a compliance controller included in the robot while applying a target position corresponding to the control position input via the remote controller. It is noted that the association between the position information and the strength information expresses that the position information and the strength information refer for example to the same time instant or the same time interval in which they are respectively detected. It is noted that the strength includes force and/or torque applied by the EE. Thus, the association can also be expressed by (Xt, Ft and/or Tt), where Xt indicates the position of the EE corresponding to time t (or to time interval Ti), F the force to time t (or to time interval Ti), and T the torque to time t (or to time interval Ti). In the case of time intervals, time interval Ti indicates that sampling can be made within time intervals Ti, with i=0, 1, 2, ..., wherein the intervals can have the same or different lengths. The time t indicates the time at which a sampling is done, which can be regularly spaced timings or differently spaced-apart timings.

The above-mentioned training data further includes, in association with the position information and the strength information, stiffness information and image information. Referring to the above notation, this may be expressed as (Xt, Ft and/or Tt, Kt, It), wherein Kt indicates the stiffness of the robot corresponding to time t (or to time interval Ti) and It indicates the image information corresponding to time t (or to time interval Ti). The stiffness information indicates a stiffness applied by the rigid robot in correspondence of the position information; for example, the stiffness applied by the robot's compliance controller when actuating the robot to take a target position in response to the position input via the remote controller. The image information represents one or more images in correspondence of a respective one of the one or more positions of the EE. Preferably, each of or at least one of the one or more images shows at least a portion of the EE. As later illustrated, one or more cameras can be positioned to take images of the robot and preferably to frame an area where at least a portion of the EE is (likely to be) captured within an image. Further, and optionally, the image may include also at least a portion of an object that is to be manipulated and/or that may interact with the robot and/or the EE.

The above considerations are applicable to what will be described in the following, including other embodiments, unless otherwise stated; the vice-versa also holds, namely what will be described below, also in relation to other embodiments, applies to the above unless otherwise stated.

According to another embodiment, a method (not illustrated) is provided for controlling a rigid robot to perform manipulation by means of an end effector, EE. This method includes a step of determining, based on a trained control model, a position that the robot has to take based on a current position information, a current strength information and current image information of the robot. The training control model has been trained based on a training data set including position information, strength information, stiffness information and image information of the robot in association with each other; for example, the training control model may be obtained by means of the method above illustrated with reference to Fig. 1. In particular, the position information, strength information, stiffness information and image information are obtained based on control information provided by a remote controller operated by a user during a manipulation task performed during training.

Optionally, in any one of the above methods, the manipulation task includes one or more manipulation actions each performed at a corresponding time instant in response to a respective input from the remote controller. In this example, the position information represents one or more positions of the EE in response to a respective one of the one or more control actions. In other words, a control position detected by the remote controller (according for example to a certain sampling timing) causes the EE to take a position corresponding to the detected position. One position detected (sampled) by the remote controller may translate in multiple positions taken by the EE while moving towards a target position corresponding to the detected position. In order to complete the task, the user typically operates the controller continuously, in the sense that the controller samples the control position (as a result of the user's operation) at a given sampling rate; each sampled position may be considered as a target position that the robot has to take within the sequence of actions towards completion of the task.

Optionally, the image information includes a plurality of images of the EE in correspondence of a respective one of the one or more positions of the EE; the plurality of images preferably refers to different points of view. In other words, for a given position taken by the EE, multiple images may be taken (substantially at the same time, in the sense that they refer to the same EE position), each image preferably corresponding to a different point of view. The point of view includes a different angle from which a certain camera captures a respective image. As stated, preferably each of the camera takes a picture of a scene including at least part of the EE. Preferably, but not necessarily, at least one or more of the images capture also an object that is to be manipulated (this is not necessary, since the EE may be moved also in areas far from the object before any interaction is required; also, tasks may be foreseen not directly or not immediately requiring an object).

Optionally, the training data further includes compliance control information representing one or more compliance parameters in correspondence of a respective one of the one or mode positions of the EE; each of the one or more compliance parameters is a parameter for controlling a strength applied by a robot during manipulation. In the context of robot control, compliant control can be defined as the allowance of deviations from its own equilibrium position, depending on the applied external force (see e.g., Amirul Syafiq Sadun, AN OVERVIEW OF ACTIVE COMPLIANCE CONTROL FOR A ROBOTIC HAND, ARPN Journal of Engineering and Applied Science, VOL. 11, NO. 20, OCTOBER 2016). Compliance control thus protects objects (e.g., workpieces) and parts of the robot (e.g., the EE) from excessive loads, for example adjusting the force applied by the robot in its operation (e.g., movement, grasping, etc.). Compliance control is sometimes also referred to as impedance/admittance control (see e.g., https://en.wikipedia.org/wiki/Impedance control).

For example, and optionally, each of the one or more compliance parameters includes a stiffness parameter of the robot. The stiffness is a parameter indicating how to control the force applied by the robot when performing a certain operation; it may be considered as a sort of feedback parameter used in the control of the robot movements in order to avoid exerting excessive pressure on the environment, robot parts, objects, etc. The stiffness parameter may thus include parameters that affect the actual force, velocity, acceleration, position applied to the robot or its parts.

Optionally, the one or more compliance parameters is in response to a respective input from the controller. In other words, the one or more compliance parameter may be set by means of the remote controller, for example may be set and/or changed by the operator by providing an input via the remote controller.

Optionally, any of the above methods includes providing a manipulation feedback to the user during the manipulation task. Preferably, the manipulation feedback includes providing a feedback in correspondence of the one or a plurality of manipulation actions. In other words, the user operates the remote controller in order to move the robot. In response, for example based on the position and/or force applied by the robot, the user is provided with a feedback as a result of the actual position and/or force applied by the robot. The feedback may be provided in response to each input provided by the controller, or at time instants that are independent from those of the input and/or at a sampling rate that is different from the user input sampling rate. In other words, the feedback (e.g., the strength F and/or T) may be provided in response to each user input (i.e., at timings each corresponding to a use input sampling timing), or at time instants that are independent of the user input timing. One example of such feedback it a haptic feedback; this may be provided (for example) only if a defined minimum of strength is exceeded; in this example, the haptic feedback is provided as soon as such force is detected. In one example, a force/torque sensor (available at the robot) may provide data at a faster rate (e.g., at a 500hz sampling rate) than the user input (e.g., 90hz), so that the feedback may be independent of the timing at which the user input is given. Nevertheless, the feedback is what is sensed at the robot in response to the position taken by the robot when remotely controlled. When such user feedback is optionally provided, it is possible to reach a more effective remote control and training. Examples will be later explained.

Optionally, any of the above methods includes training a neural network to perform manipulation based on the generated training data.

Optionally, any of the above methods includes controlling the robot to perform manipulation based on the trained neural network, an image of the EE at a given time instant and a position of the EE at the given time instant. In other words, once a neural network is trained as above explained, the robot can be controlled by inputting into the trained neural network a present position, strength, and an image. The trained model then calculates one or more positions that the robot takes when completing a certain task. Examples will be later described.

Optionally, the strength information includes at least one of a force detected at the EE and a torque detected at the EE. An appropriate sensor is provided at the robot to detect such force and/or torque.

Optionally, the control information provided by means of the remote controller (to the robot) includes control information resulting from the user responding to the manipulation feedback. In other words, when the user is provided with the feedback information, the user may provide a controlling input to compensate for the feedback. For example, when the feedback is a haptic feedback (e.g., vibration of the controller) indicating that the robot is applying a strong force and/or has hit the environment and/or is too strongly grasping an object, the user may operate the remote controller in order to depart from this circumstance. For example, the user may adjust the position and/or strength (as also described later) based on the strength feedback provided by the remote controller. This is optional and not necessary, since the robot may be capable of autonomously alleviating any risk for example by means of the compliance control implemented within the robot. Other examples of feedback are applicable, like for example acoustic, visive, etc. or combination thereof, wherein the feedback is represented for example by sound (frequency and/or intensity) and/or light (colour and/or intensity), etc.

Optionally, the training data is obtained by means of any of the above disclosed method(s) including any combination of the above described optional features.

Optionally, the remote controller provides a manipulation feedback to the user during the manipulation task. In addition, still optionally, the manipulation feedback indicates a strength applied by the robot during the manipulation task.

As anticipated, optionally, the strength indicates force and/or torque as measured in correspondence of the EE or robot. It is thus an indication of "how strongly" the robot (preferably the EE and/or other parts of the robot) is interacting with the environment and/or the object that is to be manipulated. In other words, the strength is preferably the one detected at the EE, but it may be the strength detected in other parts of the robot, of the strength detected at the EE and in one or more other parts of the robot. In further other words, the strength is the one detected in order to indicate how the robot interacts with the environment and/or object(s) to be manipulated. As explained, suitable sensor(s) are provided to detect such strength.

Unless otherwise stated, what illustrated above applies also to the below embodiments, and vice versa, so that repetitions are avoided for the sake of conciseness.

With reference to Fig. 2, an explanation is provided of another embodiment directed at an entity for obtaining a training data set for controlling a rigid robot (100) to perform manipulation by means of an end effector, EE (101). The entity includes means for controlling (120) that are configured to control, based on control information provided by a remote controller (110) operated by a user, the robot (100) to perform a manipulation task. The control information indicates at least a remotely controlled position that the robot (100) is to take during the manipulation task according to an operation of the remote controller (110) by the user. The controlling means may be represented by one or more processor units and/or one or more controller units. In one example, the controlling may be provided within the robot; in another example, the controlling means may be provided outside or remotely to the robot with the output of the controlling means transmitted to the robot for actuating the same. The controlling means may be implemented by any combination of hardware and/or software, within one device or distributed amongst devices.

The entity further includes means for obtaining (120) a training data set including position information and strength information in association with each other. The position information indicates one or more positions of the EE (101) during the manipulation task in response to the control information; the strength information indicates one or more strength values detected at the EE (101) in correspondence of a respective one of the one or more positions of the EE (101). The means for obtaining 120 may be represented by the controlling means above illustrated and further configured to handle the training data, or, in another example, may be represented by a separate controlling means (not illustrated in the figure) suitable for handling the training data. In particular, the means for obtaining may be represented by one or more processing units and/or one or more controlling units suitable to handling training data. In other words, the obtaining means are for training the robot based on input data received from the remote controller. It may be said that the means for obtaining is any combination of hardware and/or software, implemented within a single device or distributed amongst devices, for training a robot based on input provided by the controller. The entity of the present embodiment may thus be considered as an entity for training a robot, or in other words as entity for obtaining a trained model suitable for controlling a robot.

The training data further includes, in association with the position information and the strength information, stiffness information and image information. The stiffness information indicates a stiffness applied by the rigid robot (100) in correspondence of the position information. The image information represents one or more images in correspondence of a respective one of the one or more positions of the EE (101). Preferably, each of the one or more images shows at least a portion of the EE (101).

An explanation is now provided of another embodiment directed at an entity for controlling a rigid robot to perform manipulation by means of an end effector, EE. It is noted that the previous embodiment relates to an entity suitable for obtaining a training model (to be used) for controlling a robot, while the present embodiment relates to an entity for controlling a robot (to perform a task) based on a trained model. In other words, the previous embodiment relates to an training entity for training a model to be used for controlling a robot, while the present embodiment to controlling a robot based on a trained model. Thus, the trained model may be one obtained by any of the previously described methods or by the previously described training entity. The entity of the present embodiment includes means for determining, based on a trained control model, a position that the robot has to take based on a current position information, a current strength information and current image information of the robot. The means for determining may be represented by the means 120 of Fig. 2, so that the above considerations apply. For example, the controlling means 120 may be configured to use a trained model, or to communicated with a training model represented by another processing/controlling unit. The trained control model has been trained based on a training data set including position information, strength information and image information of the robot in association with each other. The position information, strength information, stiffness information and image information are obtained based on control information provided by a remote controller operated by a user during a manipulation task performed during training.

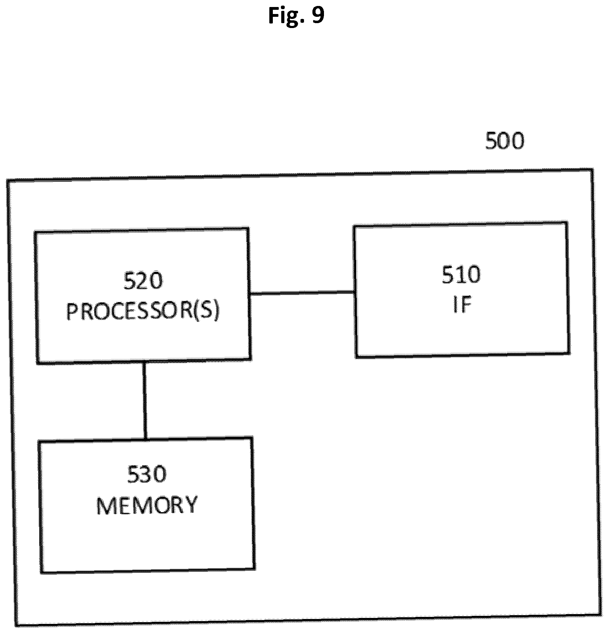

With reference to figure 9, an embodiment will be described directed to a computer program comprising instructions configured to execute, when the instructions are executed on a computer, any or a combination of the steps of the method(s) and the variants thereof as described above. Figure 9 illustrates a block diagram exemplifying a computer (500) capable of running the aforesaid program. In particular, the computer (500) comprises a memory (530) for storing the program instructions and/or the data necessary for its execution, a processor (520) for carrying out the instructions themselves and an input/output interface (510).

In another non-illustrated embodiment, it is provided a medium for supporting a computer program configured to perform, when the program is run on a computer, one or a combination of the steps according to the method(s) described above. Examples of a medium are a static and/or dynamic memory, a fixed disk or any other medium such as a CD, DVD or Blue Ray. The medium also comprises a means capable of supporting a signal representing the instructions, including a means of cable transmission (ethernet, optical, etc.) or wireless transmission (cellular, satellite, digital terrestrial, etc.).

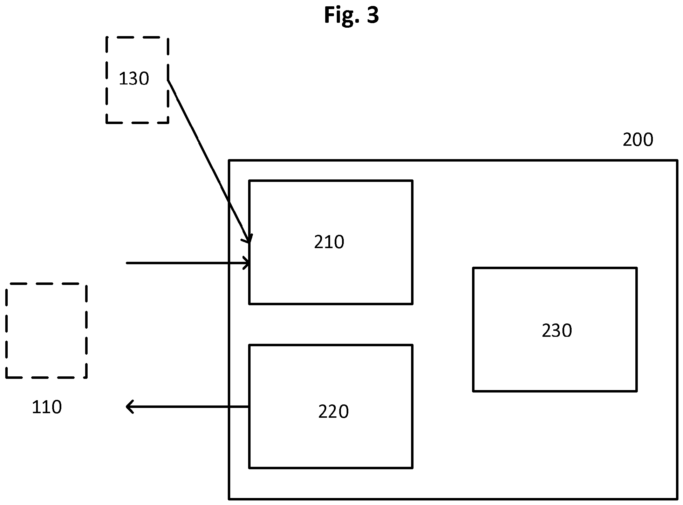

With reference to Fig. 3, it is now described an embodiment of an entity (200) for controlling a rigid robot to perform manipulation by means of an end effector, EE. The entity includes an input interface 210, an output interface 220 and a processing unit 230. The entity 200 interacts with a remote controller 110 and a sensor unit 130.

The input interface (210) is configured to receive, from a remote controller (110) operable by a user, control information relating to a manipulation task. The control information indicates at least a remotely controlled position that the robot is to take during the manipulation task according to an operation of the remote controller by a user. Optionally, the output interface (220) may be configured to provide, to the remote controller, a manipulation feedback during the manipulation task, wherein the manipulation feedback indicates a strength applied by the robot during the manipulation task. The input unit (210) is further configured to receive, from a sensor unit (130), position information and strength information, wherein the position information indicates a position taken by the EE during the manipulation task and the strength information indicates a strength applied by the EE during the manipulation task. The processing unit (230) for providing a training data set including the position information and the strength information in association with each other. Providing the training data includes obtaining or generating them in order to obtain a trained model, for example in order to obtain a trained neural network that can then later be used to control a robot. As above explained, the sensor includes any sensor suitable for providing a measurement of position of the EE and/or strength applied by the EE. Optionally, image information representing an image (including at least a portion of the EE) may be associated with the position information and strength information. Preferably, the training data set includes also stiffness information of the EE, corresponding to (in association with) the position information, strength information and image information. The association or correspondence refers to the fact that those information refer to the same time instant or time interval in which the respective information is sampled. Thanks to the use of such training data, in particular thanks to the use of the stiffness information applied by the robot in response of the remotely input position information by the user, it is possible to obtain an improved control of the robot. Also, this may be achieved by a quickly training.

Optionally, in the above description, the remote controller may be configured to detect position and orientation of a movement caused by the user; the control information may include such detected position and/or orientation of movement. Optionally, the remote controller may be configured to provide a haptic feedback indicative of the strength applied by the robot during the manipulation task, wherein this feedback may indicate an absolute value of the strength and/or a direction. Optionally, the remote controller may be configured to provide a feedback indicative of the force and torque applied by the robot during the manipulation task.

Optionally, in one example also later described, the training data is provided by means of an Action Chunking with Transformers, ACT, model. In fact, the above description may be implemented in one example according to the ACT technique.

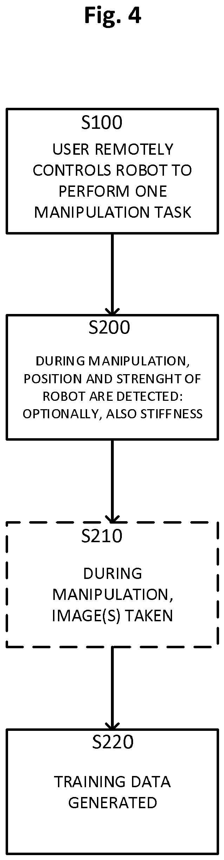

A further embodiment is described with reference to Fig. 4, illustrating a method for training a neural network (i.e., a method for obtaining a trained model). In step S100, a user remotely controls a robot to perform one manipulation task. In this step, the user may move the remote controller; the user may also set (input) a degree of stiffness, as also elsewhere explained herein. In step S200, during manipulation by the user by means of the remote controller, position and strength applied by the robot are detected, advantageously preferably also with stiffens parameters used by the compliance controller of the robot during the manipulation, and in correspondence to (in association with) the position and strength information. During the manipulation, see step S210, one or more images are taken of the EE in correspondence of a given position; in case of multiple images taken for the same position and/or sampling time/interval, each of the images is taken from a different point of view (different angle). The image information, representing the taken images, are associated to the position information, strength information and stiffness information. At step S220, training data is generated based on the position information, strength information, stiffness information and image information is association with each other.

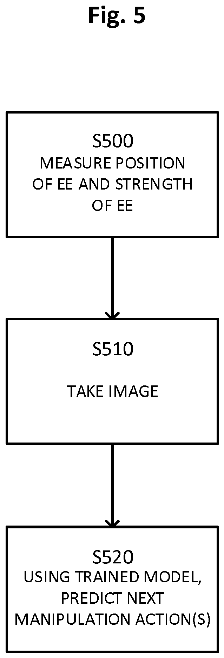

A further embodiment is described with reference to Fig. 5, illustrating a method for controlling a robot based on the trained model obtained according to any of the above training methods or training entities. At step S500, the position of an EE at a given time instance (or time interval) is taken. Also, still at step S500, the strength (F and/or T) of the EE may be detected, for example by a suitable sensor(s) capable of detecting force and/or strength. As step S510, an image is taken at the same given time instance or time interval in which the position of the EE has been sampled. In other words, the position, the strength, and the image are sampled at the same time instance or within the same sampling period. At step S520, using the trained model, one or more following actions (e.g., position) that the robot has to take are determined. More in detail, the acquired position and image are input to the trained model in order to obtain the one or more subsequent actions.

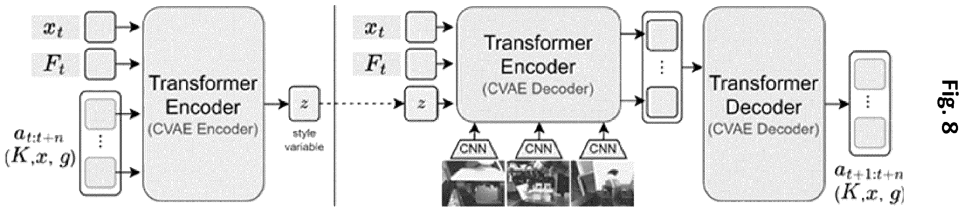

A more detailed example is now provided of what has been presented above.

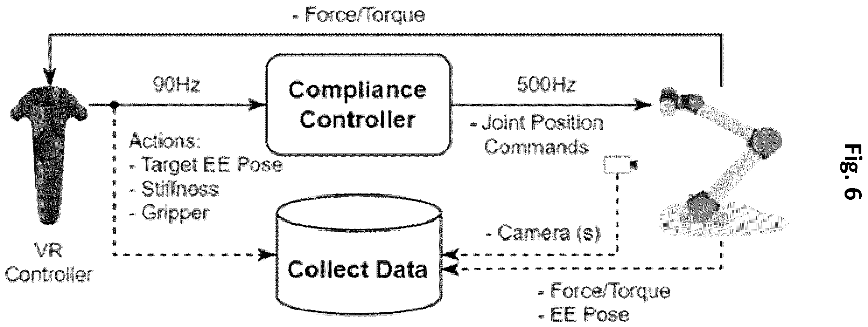

Fig. 6 shows a system for obtaining a training method as an example of the above description, aiming to enhance the training of dexterous, contact-rich manipulations to rigid robots, robots that can only be actuated through position/velocity commands (e.g., industrial robots, collaborative robots). More in detail, the depicted system shows:
1. A teleoperation interface ("VR Controller" in Fig. 6) utilizing Virtual Reality (VR) controllers, which is an example of the remote controller above described. This example provides an intuitive and cost-effective method for task demonstration (learning by demonstration); such type of controllers may also provide haptic feedback via the vibration mechanism of the controllers (as said, this is optional). The user can instruct not only the position to follow and the gripper actions but also the degree of stiffness of the robot, as also later illustrated in further detail.
2. In this example, Comp-ACT (Compliance Control via Action Chunking with Transformers) is used to leverage the demonstrations to learn variable compliance control from just a few demonstrations. A description of ACT can be found in [1] "Learning Fine-Grained Bimanual Manipulation with Low-Cost Hardware", Tony Z. Zhao et al., arXiv:2304.13705v1 [cs.RO], 23 Apr 2023. In this example, the ACT method is extended to enable rigid robots to learn contact-rich manipulation tasks. Comp-ACT uses the robot's end-effector Cartesian poses "x", and force-torque measurements "F", to predict a sequence of future actions "a"; which include the stiffness of the robot "K", the Cartesian poses "x", and the gripper actions "g". This will be further explained below with reference to Fig. 8. According to the present disclosure and the present example, it is possible to facilitate the training of rigid robots to perform complex contact-rich tasks that are difficult to specify through other methods (motion planning, reinforcement learning, etc.); this is enhanced, e.g. thanks to the use of the stiffness parameter that the robot's compliance controller applies during training by way or remote manipulation/demonstration. This can be applied to a wide range of applications in industrial automation, laboratory automation, households (cooking, cleaning), etc. In fact, what is here disclosed can be used in a wide range of industries to facilitate the automation of manipulation tasks with widely available rigid robots (e.g., Universal Robots). The end-user can intuitively control the robot using the VR controller-based teleoperation interface. The optional haptic feedback and stiffness actions allow the user to react safely and efficiently to contact forces to handle delicate tasks.

Existing methods, such as ACT above referenced, consider only the robot's position (position control), which makes them impractical and dangerous for rigid robots. With position control only, rigid robots may apply high contact forces to achieve position goals, which, for contact-rich tasks, might damage the manipulated objects or the robot itself. In Bi-ACT [2: Buamanee, Thanpimon, et al. "Bi-ACT: Bilateral Control-Based Imitation Learning via Action Chunking with Transformer." arXiv preprint arXiv:2401.17698 (2024)], force-torque information is considered, but the control method is not applicable to rigid robots. A low-level control interface such as torque or current control is necessary. In [3: Rakita, Daniel, et al., "A motion retargeting method for effective mimicry-based teleoperation of robot arms." Proceedings of the 2017 ACM/IEEE International Conference on Human-Robot Interaction. 2017], only the teleoperation system is considered; however, it also does not take into account the force-torque information, so the safety of the manipulation depends solely on the operator. The present disclosure uses compliance control to enable careful manipulation of contact forces by defining the robot's desired stiffness. With this technology, the user can operate the robot via the teleoperation interface to define the desired stiffness at different stages of the task. Then, the task can be learned with the appropriate stiffness using for example Comp-ACT method. Hence, the present disclosure uses position, force-torque, and stiffness information to learn contact-rich manipulation tasks, thus enhancing known solutions arriving at an improved control that is also easy to obtain (i.e., it is easy to train a robot to perform an accurate manipulation).

In order to facilitate the understanding of the present disclosure, the example based on Comp-ACT is here also provided (variable Compliance Control via Action Chunking with Transformers, Comp-ACT). Comp-ACT includes gathering demonstrations, including the Cartesian trajectory of the robots' end-effector, the measured F/T on each robot, the compliance control parameters during teleoperation (i.e., stiffness), and camera images from multiple points of view. Following that, a Comp-ACT policy is trained to predict a chunk of future actions given the current state of the robot. The solution according to this example learns a policy using the Cartesian task space instead of joint space; the external F/T is also used to condition the future action; and the stiffness parameters of the compliance controller are simultaneously learned. The main blocks of this example may be summarized as follows:
- An open-source variable compliance control-based teleoperation system with (optional) haptic feedback that uses Virtual Reality (VR) controllers (other controllers may be used as above explained). This teleoperation system is particularly useful for position-controlled robots but can be easily used with other types of robots.
- Comp-ACT: A novel approach to learning variable compliance control from a few demonstrations via Action Chunking with Transformers. Comp-ACT learns the reference Cartesian trajectory and the corresponding time-varying stiffness parameters simultaneously.

The example and described solution have been validated on various complex contact-rich tasks on a single arm and a bimanual robot system in simulation and real hardware.

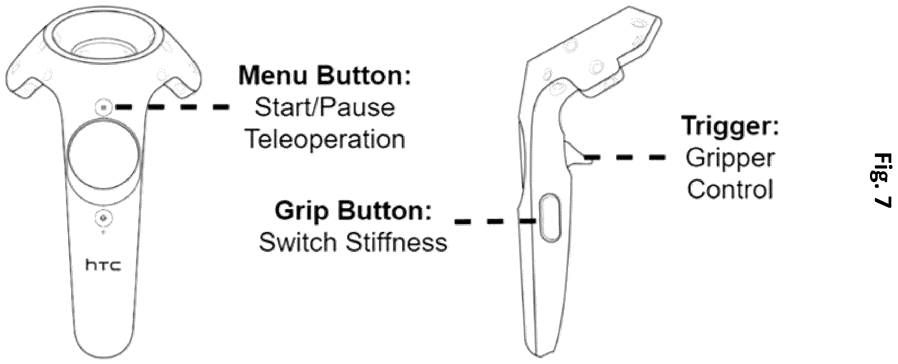

Going back to Fig. 6, it is therein shown a Virtual Reality (VR) controllers, in this example specifically the HTC Vive Cosmos Elite. The VR controller enables the user to control the robot by providing the reference position for the robot to follow, the commands to the gripper, and, optionally, the desired degree of compliance. For safety reasons, a rigid robot should not be teleoperated to solely follow a desired trajectory. By design, rigid robots consider any environmental resistance a position error. Thus, they try to correct the error by exerting large torques, which may damage the environment or the robot. For this reason, the teleoperation system in this example uses a Cartesian compliance control approach to allow the operator to demonstrate contact-rich manipulation tasks safely. Additionally, through this exemplary teleoperation interface, the operator can receive haptic feedback through the vibration mechanism of the controllers. During teleoperation, the user can operate the robot more safely by considering the haptic feedback (when optionally present) and adapting its behaviour accordingly. For example, the user could more advantageously move away from the contact or change the controller's degree of compliance (stiffness). The present teleoperation system works as follows. First, PyOpenVR is used, a Python wrapper for ValveSoftware's OpenVR library, to obtain the tracked pose of the controllers at 90Hz. We are interested in the relative translation and orientation of the controller from a defined starting pose. The relative motion of the controller is then mapped to the pose of the robot's end effector (EE) and defined as the target pose for the controller to follow. The operator sets the starting pose of the controller used to compute the relative motion through the menu button of the controller, which also enables /disables the teleoperation. This control mechanism allows the user to operate the robot easily regardless of the workspace size difference due to the different lengths of the human arm and the robot arm. Additionally, the trigger on the controller may be optionally used to signal the desired gripper pose, which ranges from zero to a hundred percent of the maximum opening width of the gripper. The grip button switches between different degrees of compliance, i.e., the compliance controller stiffness (i.e., the user sets a parameter related to the stiffness that the robot's compliance controller should apply). The haptic feedback to the user is achieved by mapping the contact force measured at the robot's wrist F/T sensor (an example of the previously described sensor) to the level of intensity of the controller's vibration. The button bindings are shown in Figure 7 according to the present example.

The Forward Dynamics Compliance Control (FDCC) method [S. Scherzinger et al., "Forward dynamics compliance control (FDCC): A new approach to cartesian compliance for robotic manipulators," in IEEE/RSJ International Conference on Intelligent Robots and Systems, 2017, pp. 4568-4575] is used to control the robots with commands from either the teleoperation system or the learned policy. FDCC combines three control principles, Impedance Control, Admittance Control, and Force Control, into one new strategy to realize Cartesian compliance control. As a critical component in FDCC, forward dynamics simulations of a virtual model are leveraged to map Cartesian inputs directly to joint control commands, leading to good stability in singularities. This proposed system uses the open-source implementation [FZI Forschungszentrum Informatik, "Cartesian controllers," https: //github.com/fzi-forschungszentrum- informatik/cartesian_controllers, 2023.] of FDCC for ROS. Also, in this example, we consider the following parameters as controllable and time-variant: the goal Cartesian position of the robot's EE xg and the stiffness of the controller K. Other parameters, including the goal wrench Fg, were manually fine-tuned for the teleoperation and kept constant for all tasks and experiments. For the interested reader, see more details of FDCC's parameters in Scherzinger referenced above.

As anticipated, Comp-ACT is used in this example. In particular, we aim to learn Cartesian variable compliance control from a few demonstrations with the aid of the Transformer model. To achieve this, Comp-ACT is used, which modifies ACT to enable it to handle Cartesian compliance control. Comp-ACT predicts target Cartesian EE poses and robot stiffness parameters conditioned on the current observation, leveraging the Transformer's capability to predict multimodal action data. The predicted desired Cartesian pose and stiffness parameters serve as inputs for the compliance controller. This enables the robots to adjust their arm stiffness autonomously depending on the task phase while following the desired motion trajectory to execute the task. Figure 8 shows the architecture of Comp-ACT. The Transformer-based policy has shown great promise in processing long-horizon multimodal action data in an autoregressive manner. We built Comp-ACT upon Action Chunking with Transformers [see Zhao reference d above] to learn Cartesian EE trajectory and robots' stiffness from demonstrations. ACT predicts a sequence of future actions instead of a single action like in standard Behavioral Cloning (BC), mitigating compounding errors. Following ACT, we learn the policy as the decoder of a conditional variational autoencoder (CVAE). It predicts a sequence of action conditioned on the current observation, including RGB images, F/T sensor readings, and proprioception. Figure 8 illustrates the architecture of the CVAE. The predicted Cartesian EE pose and stiffness are then fed into the compliance controller described above. Each robot's action includes three components: a 6-dimensional Cartesian pose (with position and orientation in 3D space, the latter in axis-angle form), a 1-dimensional gripper action (non-binary desired opening width), and a 12-dimensional vector to represent the stiffness parameters. Consequently, the bimanual robot's action space is 38-dimensional. We use the Cholesky representation to encode the stiffness matrix for translation and rotation. The Cholesky representation is the flattened form of the upper triangular matrix K" from the Cholesky decomposition of the stiffness matrix K, where K = K^^{T} K^.

Data has been collected and experiments made to confirm that the present solution enhances those known. The demonstration data was collected using the teleoperation system described above and the compliance controller described also above. The action to be saved is taken from the VR controller, including the target EE pose, the gripper's command, and the desired degree of compliance. This example considered three predefined stiffness modes during the compliant teleoperation of robotic arms. Specifically, the stiffness values considered are 250, 500, and 750 for low, medium, and high, respectively (less or more values may be considered, of course). The same stiffness is applied to all diagonal values of the stiffness matrix. During demonstrations, the operator can switch between two selected stiffness modes out of three using the grip button on the VR controller. For each task and arm, one mode is always set to medium stiffness, while the other alternates between high and low stiffness, predetermined based on the task requirements. Table I indicates the stiffness modes available on each task according to an example.

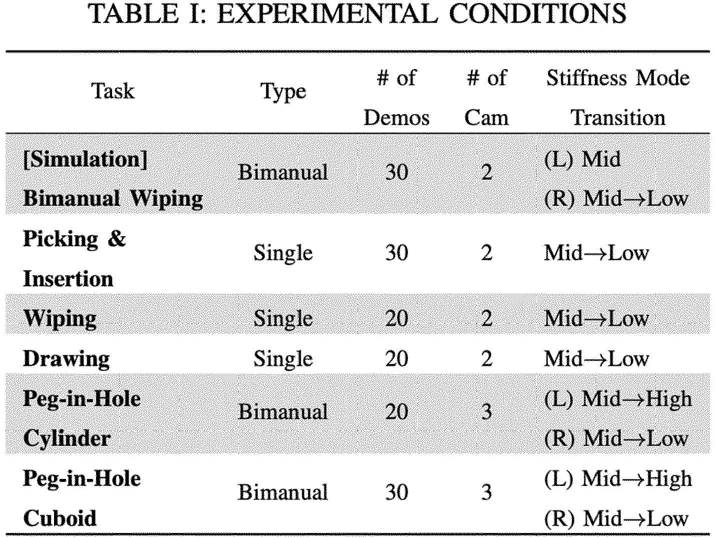

Both simulation and real-world experiments were conducted to evaluate Comp-ACT's performance. It was relied on simulation to compare Comp-ACT against ACT without compliance control due to the risks of implementing ACT on rigid, position-controlled robots in the real world. Real-world experiments assessed the proposed Comp-ACT's performance in challenging tasks. Demonstrations were also performed to provide a diversity of motion strategies for each task.

Two UR5e robot arms with built-in force-torque sensors in simulation and real-world experiments were used, with bimanual and single-arm tasks. Two cameras, Realsense SR305, are attached to the wrist of each arm. Another static camera with a wider field of view is in front of the task space. Different combinations of these cameras were used as observations on each task. For simulation, the physics engine MuJoCo is used. A virtual twin of the robotic setup was created as a new robosuite [35] environment. The robotic system runs on a single machine with a CPU Intel 17-12700F and a GPU NVIDIA GeForce RTX 3070. The simulation and the policy training are performed on a different machine with a GPU NVIDIA GeForce RTX 4090.

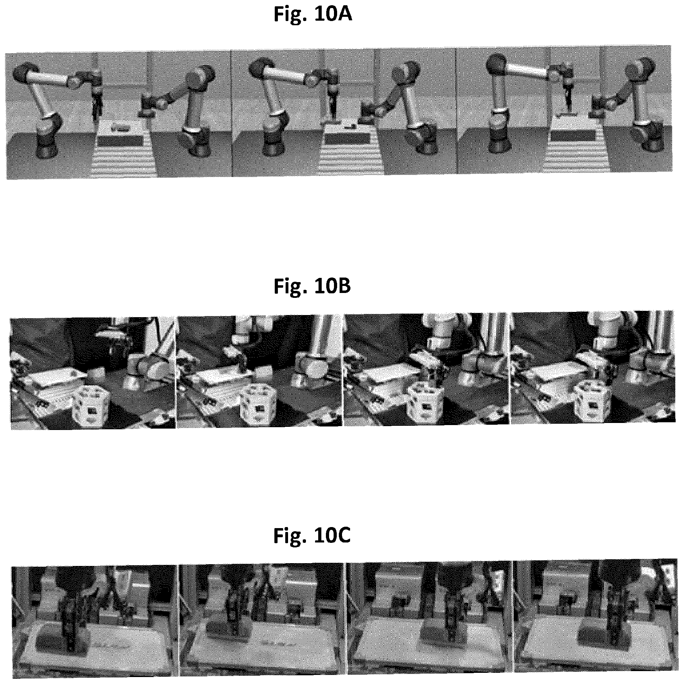

Comp-ACT was evaluated with 6 challenging contact-rich manipulation tasks, one in simulation and five in our real-world robotic system. Examples of tasks are depicted in Fig. 10A to 10F.

For example, Fig. 10A shows a Bimanual Wiping task in robosuite: The goal is to pick up the hammer (left), wipe the exposed dirt beneath the hammer with the other arm (center), and then return the hammer to its initial place (right). During demonstrations, the left arm is kept at a constant medium stiffness. In contrast, the right arm begins with a medium stiffness mode to approach the table, then switches to a low stiffness mode to delicately apply force against the table during the wiping motion. The task is randomized by rotating the hammer between ±15°, and changing the shape of the dirt. 30 demonstrations were collected for this task.

Fig. 10B shows single-arm Picking & Insertion: The task consists of picking up a toy wooden peg and inserting it into its corresponding hole in a wooden box. A proper grasp is required to facilitate the alignment of the peg with the hole. During demonstrations, the demonstrator utilizes a medium stiffness mode for general manipulation and switches to a low stiffness mode for the insertion phase that involves physical contact. The peg is placed at the edge of the whiteboard with a random rotation of about ±15°. The wooden box's position is not fixed, so the robot can move it during the peg insertion. 30 demonstrations were collected for this task.

Fig. 10C shows Single-arm Wiping: The goal is to wipe marks on a whiteboard. The task starts with the robot already holding the eraser. During demonstrations, the demonstrator begins with a medium stiffness mode to approach and then switches to a low stiffness mode to apply force to the whiteboard. The task requires applying sufficient contact force to the board during the wiping motion. The task starts with a random mark drawn in an area of ±5 cm from the center of the board. 20 demonstrations were collected for this task.

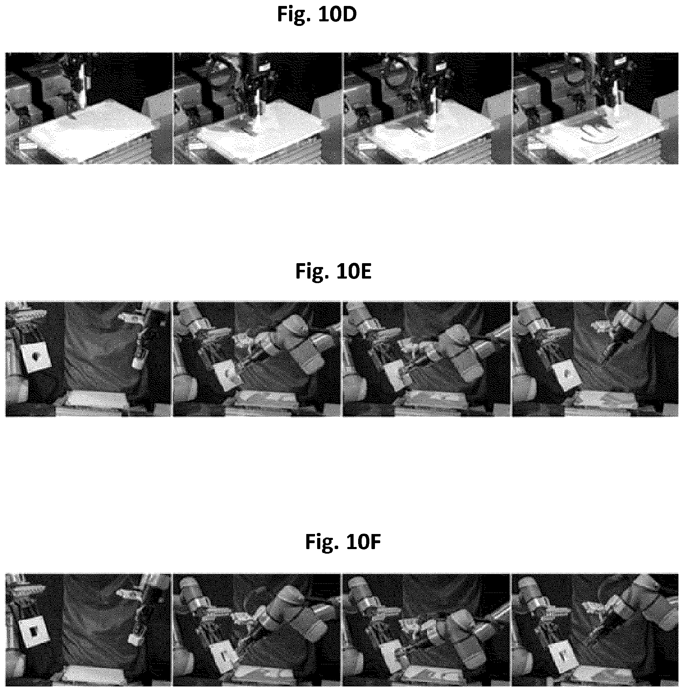

Fig. 10D shows Single-arm Drawing: The goal is to draw a simple emoji smile on a whiteboard. The task starts with the robot already grasping a pen. The robot must write three parts of a face while keeping a consistent force while in contact. This task is interesting in that it requires frequent switching between in-contact writing and free motion. It also requires careful coordination of the positional relationship between each part of the smile. During demonstrations, the demonstrator employs a medium stiffness mode for the free motion between drawing stages and transitions to a low stiffness mode to apply force during the in-contact drawing. 20 demonstrations were collected for this task.

Fig. 10E shows Bimanual Peg-in-Hole (Cylinder): A 3D-printed peg and matching hole with tolerance of 2 mm were used for this task. The relative position and orientation of the two arms need to be accurately aligned to complete the round-shaped peg insertion. During demonstrations, the demonstrator operates the left arm in a medium stiffness mode for free motion and switches to high stiffness to make the robot resist motion when the other arm pushes the peg into the hole. On the contrary, the right arm switches to low stiffness to allow contact for fine adjustment of the peg's position. 20 demonstrations were collected for this task.

Fig. 10F shows Bimanual Peg-in-Hole (Cuboid): A 3D-printed peg and matching hole with tolerance of 2 mm were used for this task. Besides matching the peg and hole's surface position and orientation, the cuboid insertion also requires aligning each corner by rotating around the direction perpendicular to the surface. The same stiffness switching strategy described in Figure 9 was used during demonstrations. 30 demonstrations were collected for this task.

The summary of experimental conditions for each task is shown in above Table I. For every task, a policy was learned from scratch for 20000 epochs, corresponding to 2-5 hours in the actual time, depending on the number of demonstrations and the number of cameras used.

As a result of the testing performed, the solution according to the present disclosure learned and solved the assigned tasks correctly. When the contact force applied to the table is examined, it is clear that when using joint-position control with the ACT policy, the robot would apply force to the table of more than 5 times higher than when using the here proposed Comp-ACT method. In the case of ACT, minor errors in the trajectory predicted by the policy would result in significant forces being applied to the table due to the joint-position control scheme. In contrast, with the present compliance control scheme, minor errors in the trajectory would not result in significant forces due to the low stiffness used while wiping.

Additionally, a comparison was made of the herein proposed method that includes the F/T data as of the observation with a version that did not include it, called Comp-ACT w/o F/T. Experimental results show that including the F/T resulted in more consistently applying less contact force during the wiping action. Nevertheless, even without including the F/T data, the contact force was similar to or even lower than that achieved by the demonstrator.

In the five real-world tasks, it was evaluated the efficacy of Comp-ACT in complex, real-world, contact-rich manipulation tasks. As is also done in the simulation task, it was conducted an ablation study to determine the effectiveness of F/T data as observational input for the policy. The results are summarized in Table II:

**TABLE II: REAL-WORLD TASKS SUCCESS RATE**

| Task Name | | Comp-ACT | |
|---|---|---|---|
| | | F/T | w/o F/T |
| Single Robot | Picking & Insertion | **70** | 35 |
| | Wiping | 70 | **100** |
| | Drawing | **100** | **100** |
| Bimanual | Peg-in-Hole (Cylinder) | **100** | 40 |
| | Peg-in-Hole (Cuboid) | **70** | 50 |

Generally, the test results indicate a high success rate, even when considering a relatively low number of demonstration; for example, in the case of picking and insertion, the results were achieved with only 30 demonstrations, which is remarkable when considering the numerous available different orientations from the picking phase during demonstrations. Also, even if the presence of absence of F/T may lead to different results in the case of wiping, still the method achieves a high success rate over known solutions like in the other tasks.

The herein disclosed solution allows learning contact-rich manipulation tasks from a few demonstrations, with a focus on enabling rigid robots to tackle these types of manipulation tasks safely. The evaluation showed that Comp-ACT could learn complex tasks with a high success rate from 20 to 30 demonstrations, which is particularly advantageous. Additionally, results showed why the prior art solutions like the baseline ACT method, with its joint position-based control, would not be suitable for rigid robots as errors in the predicted trajectory could result in undesired large contact forces that may damage the manipulated objects or the robot. On the contrary, solutions like those herein disclosed (and as confirmed when implementing by means of Comp-ACT) reduces the risk of excessive forces by learning the stiffness parameters of the underlying compliance controller, enabling safe task execution with variable

In the present description, reference has been made to neural networks, or units (like sensor(s), memory, processor, etc.), etc. The invention is not limited to the specific networks and/or units therein described, and it in fact equally applies to respective means; thus, the neural network, memory, processor, sensor etc. may be substituted by neural network means, memory means, processing means, sensing means, etc., respectively. These network and/or units (or respective means) can be implemented as a distinct/self-contained units/entities or as distributed units/entities (i.e. implemented through a number of components connected to one another, whether physically near or remote); these, be they concentrated or distributed, can further be implemented through hardware, software or a combination thereof. In this context, it is noted that the controlling means may also be named controller to include any suitable hardware and software combinations. Similarly, the means for obtaining as above illustrated may also be names obtainer or training processor.

Many of the embodiments and examples have been explained with reference to steps of methods or processes. However, what has been described can also be implemented in a program to be run on a computing entity (also distributed) or an entity whose means are suitably configured. As illustrated above, the entity can be implemented in a single device, via HW/SW or a combination thereof, or in multiple interconnected units or devices (likewise HW, SW or a combination thereof). Naturally, the description set forth hereinabove concerning embodiments and examples that apply the principles recognised by the inventors is provided solely by way of example of these principles and therefore it should not be understood as a limitation of the scope of the invention claimed herein.

## Claims

1. Method for obtaining a training data set for controlling a rigid robot to perform manipulation by means of an end effector, EE, the method including:
- controlling (S10), based on control information provided by a remote controller operated by a user, the robot to perform a manipulation task, the control information indicating at least a remotely controlled position that the robot is to take during the manipulation task according to an operation of the remote controller by the user;
- obtaining (S20) a training data set including position information and strength information in association with each other, wherein the position information indicates one or more positions of the EE during the manipulation task in response to the control information and the strength information indicates one or more strength values detected at the EE in correspondence of a respective one of the one or more positions of the EE, wherein
the training data further includes, in association with the position information and the strength information, stiffness information and image information, wherein the stiffness information indicates a stiffness applied by the rigid robot in correspondence of the position information, and wherein the image information represents one or more images in correspondence of a respective one of the one or more positions of the EE, wherein preferably each of the one or more images shows at least a portion of the EE.

2. Method for controlling a rigid robot to perform manipulation by means of an end effector, EE, the method including:
determining, based on a trained control model, a position that the robot has to take based on a current position information, a current strength information and current image information of the robot, wherein
the training control model has been trained based on a training data set including position information, strength information, stiffness information and image information of the robot in association with each other, wherein
the position information, strength information, stiffness information and image information are obtained based on control information provided by a remote controller operated by a user during a manipulation task performed during training.

3. Method according to any of claims 1 to 3, wherein
the manipulation task includes one or more manipulation actions each performed at a corresponding time instant in response to a respective input from the remote controller, wherein
the position information represents one or more positions of the EE in response to a respective one of the one or more control actions.

4. Method according to any of the preceding claims, wherein the training data further includes compliance control information representing one or more compliance parameters in correspondence of a respective one of the one or mode positions of the EE, each of the one or more compliance parameters is a parameter for controlling a strength applied by a robot during manipulation.

5. Method according to claim 4, wherein each of the one or more compliance parameters includes a stiffness parameter of the robot.

6. Method according to claims 4 or 5, wherein the one or more compliance parameters is in response to a respective input from the controller.

7. The method according to any of the preceding claims, including providing a manipulation feedback to the user during the manipulation task, wherein the manipulation feedback preferably includes providing a feedback in correspondence of the one or a plurality of manipulation actions.

8. The method according to any of the preceding claims, further including training a neural network to perform manipulation based on the generated training data.

9. The method according to claim 7, further including controlling the robot to perform manipulation based on the trained neural network, an image of the EE at a given time instant and a position of the EE at the given time instant.

10. The method according to any of the preceding claims, wherein the strength information include at least one of a force detected at the EE and a torque detected at the EE.

11. The method according to any of claims 1 to 10, wherein the control information provided by means of the remote controller include control information resulting from the user responding to the manipulation feedback.

12. Method according to any of the preceding claims, wherein the remote controller provides a manipulation feedback to the user during the manipulation task, further wherein the manipulation feedback indicates a strength applied by the robot during the manipulation task.

13. A computer program comprising instructions configured to execute, when said instructions are executed on a computer, the steps of any of claims 1 to 12.

14. An entity for obtaining a training data set for controlling a rigid robot (100) to perform manipulation by means of an end effector (101), EE, the entity including:
- means for controlling (120), based on control information provided by a remote controller (110) operated by a user, the robot (100) to perform a manipulation task, the control information indicating at least a remotely controlled position that the robot (100) is to take during the manipulation task according to an operation of the remote controller by the user;
- means for obtaining (120) a training data set including position information and strength information in association with each other, wherein the position information indicates one or more positions of the EE (101) during the manipulation task in response to the control information and the strength information indicates one or more strength values detected at the EE (101) in correspondence of a respective one of the one or more positions of the EE (101), wherein
the training data further includes, in association with the position information and the strength information, stiffness information and image information, wherein the stiffness information indicates a stiffness applied by the rigid robot (100) in correspondence of the position information, and wherein the image information represents one or more images in correspondence of a respective one of the one or more positions of the EE (101), wherein preferably each of the one or more images shows at least a portion of the EE (101) .

15. A entity for controlling a rigid robot to perform manipulation by means of an end effector, EE, the entity including:
means for determining (120), based on a trained control model, a position that the robot has to take based on a current position information, a current strength information and current image information of the robot, wherein
the trained control model has been trained based on a training data set including position information, strength information and image information of the robot in association with each other, wherein
the position information, strength information, stiffness information and image information are obtained based on control information provided by a remote controller operated by a user during a manipulation task performed during training.
